# DEMANDE DE BREVET EUROPEEN

(11) **EP 0 556 134 A2**
(43) Date de publication de la demande: **18.08.1993**
(21) Numéro de dépôt: 93420055.1
(22) Date de dépôt: 09.02.1993
(51) Int. Cl.: H02M 5/458, H05B 39/04

(54) **Dispositif - variateur de l'intensité du courant électrique dans un récepteur**

(30) Priorité: 14.02.1992 FR 9201900
(71) Demandeur: CABLECO, F-69210 Savigny (FR); Poumey, Michel, F-69130 Ecully (FR); SOCIETE DU GAZ DE BORDEAUX, F-33000 Bordeaux (FR); GENERAL EXPORT INDUSTRIES - SOGEXI, F-69380 LES CHERES (FR)
(72) Inventeur: Poumey, Michel, F-69130 Ecully (FR)
(74) Mandataire: Laurent, Michel

(57) **Abrégé**

Ce dispositif-variateur d'intensité d'un courant électrique dans un récepteur (3) comprend :
- un circuit primaire (1) comportant un pont redresseur (4), branché aux bornes (5,6) du secteur d'alimentation électrique, définissant une borne positive (7) et une borne négative (8) après redressement, bornes auxquelles sont montés en série d'une part, un interrupteur rapide I et d'autre part un circuit résonant parallèle (9), comprenant en parallèle une inductance L et un condensateur C ;
- un circuit secondaire (2), couplé magnétiquement au circuit primaire (1), et intégrant en série le recepteur (3) dont on désire faire varier l'intensité.

## Description

L'invention concerne un dispositif permettant de faire varier l'intensité du courant électrique traversant un récepteur de manière générale, et plus particulièrement une lampe à incandescence.

Traditionnellement, les variateurs d'éclairage, également dénommés gradateurs, fonctionnent selon le principe du hachage de la sinusoïde du courant alternatif distribué. Comme on le sait, le courant du secteur d'alimentation est un courant alternatif sinusoïdal, de fréquence 50 ou 60 Hertz selon les pays, et de tension 220 à 240 Volts, ou 110 à 120 Volts.

Ce hachage de la sinusoïde est obtenu au moyen d'un triac ou de deux thyristors associés, montés en série avec la lampe ou le récepteur en question, le circuit ainsi constitué étant fermé aux bornes de la tension alternative d'alimentation. De fait, ce triac coupe le courant qui traverse le filament de la lampe au rythme de la période du courant. Ce principe de coupure dit à "controle de phase", permet d'obtenir une bonne variation de l'intensité lumineuse, depuis presque 0 jusqu'à 100 % de celle-ci. De fait, pour obtenir une intensité lumineuse très faible, voisine de 0, on commande la fermeture du triac avec un retard de phase de presque 180 ° par rapport à la tension. Pour obtenir une intensité lumineuse moitié de l'intensité lumineuse maximum, on procède à la fermeture du triac avec un retard de phase de 90° par rapport à la tension, et enfin pour obtenir l'éclairement maximum, le triac est fermé en permanence. De fait, on conçoit qu'un tel procédé, simple de réalisation, et peu onéreux, permet de commander facilement des lampes jusqu'à des puissances de 1 000 Watts.

Néanmoins, il présente différents inconvénients. Tout d'abord, il n'y a pas d'isolement galvanique entre la lampe et le secteur d'alimentation électrique, d'où la nécessité de relier à la terre les parties métalliques de la lampe commandée. Or, en usage domestique, les prises de terre ne sont pas réparties dans toute l'habitation.

En outre, avec un tel dispositif, la lampe est soumise directement à la tension du secteur. De la sorte, ce type d'alimentation ne peut fonctionner avec des lampes à basse tension, telles que notamment les lampes halogènes 12 Volts, largement répandues pour l'usage domestique.

Enfin, la forme du courant électrique qui traverse le filament de la lampe n'est pas sinusoïdale, compte tenu du hachage effectué par le triac et, les variations rapides de l'intensité de ce courant lors de la fermeture de l'interrupteur commandé provoquent des parasites ainsi que des harmoniques de la fréquence de la tension d'alimentation. Ces derniers phénomènes "polluent" les réseaux de distribution d'électricité, d'autant plus que d'une part, les quantités de variateurs de ce genre sont en large croissance et d'autre part, que les puissances unitaires des lampes ainsi commandées ont augmenté avec la diffusion importante des lampes halogènes de 220 Volts. Cette "pollution" peut s'avérer gênante pour certains types d'appareils électro-domestiques, tels que notamment, les téléviseurs, les machines à laver, fours, etc..., comprenant des circuits de commande et de contrôle électroniques.

L'objet de l'invention est de proposer un dispositif-variateur du courant électrique dans un récepteur, et notamment dans une lampe, s'affranchissant de tous les inconvénients rappelés ci-dessus, et de mise en oeuvre tout aussi aisée que celle des dispositifs connus à ce jour.

Ce dispositif-variateur d'intensité d'un courant électrique dans un récepteur comprend :
- un circuit primaire comportant un pont redresseur, branché aux bornes du secteur d'alimentation électrique, définissant une borne positive et une borne négative après redressement, bornes auxquelles sont montés en série d'une part, un interrupteur rapide, et d'autre part un circuit résonant parallèle, comprenant en parallèle une inductance et un condensateur ;
- un circuit secondaire intégrant en série le recepteur dont on désire faire varier l'intensité.

Selon l'invention, le circuit secondaire est couplé magnétiquement au circuit primaire, en l'absence de tout circuit magnétique, le circuit secondaire intégrant à cet effet une inductance L'' branchée aux bornes dudit récepteur.

Par "couplage magnétique", on entend au sens de l'invention un couplage dans l'air, en l'absence de tout circuit magnétique, tel que par exemple noyau de fer doux, ferrite, ou dispositif analogue d'un transformateur etc....

En d'autres termes, l'invention propose un dispositif-variateur d'intensité qui, du fait du couplage magnétique entre le circuit alimentant le récepteur et le circuit branché directement aux bornes du secteur d'alimentation électrique, permet de fonctionner à des fréquences très élevées, typiquement entre 25 et 100 kilohertz, s'affranchissant de la sorte de tous les inconvénients des dispositifs connus à ce jour, et permettant en outre d'utiliser des lampes ou autres récepteurs de tension de fonctionnement quelconque, ce que l'on ne pouvait faire à ce jour. Ce nouveau type de variateur permet avantageusement de faire varier l'intensité du courant électrique traversant tant les lampes à incandescence, que les résistances et les moteurs électriques.

Dans cette forme de réalisation de l'invention, le couplage magnétique s'effectue directement au moyen de l'inductance du circuit primaire, couplée magnétiquement avec une inductance montée en série avec le circuit secondaire.

Selon une forme de réalisation avantageuse de l'invention, le circuit secondaire comporte en parallèle un condensateur, les valeurs de l'inductance et du condensateur de ce circuit secondaire étant adaptées pour entrer en résonance à la fréquence de fonctionnement du circuit primaire, de telle sorte à transmettre le maximum de puissance au récepteur.

De manière avantageuse, l'interrupteur rapide est du type à semi-conducteur. Il est associé à un circuit de gestion de son ouverture et de sa fermeture, constitué par d'une part, un circuit de synchronisation, d'autre part un circuit monostable du type "timer", et enfin d'un circuit de commande de la durée effective de fermeture dudit interrupteur. Dans ce cas, le circuit primaire comporte une diode montée en dérivation par rapport à l'interrupteur, et dont le sens passant est défini du pôle négatif vers le pôle positif du pont redresseur.

Avantageusement, le circuit primaire comporte en parallèle un condensateur, destiné à filtrer les composantes haute fréquence du courant d'alimentation, notamment pour éviter tout risque de transfert de ces composantes sur le secteur d'alimentation électrique.

Dans une autre forme de réalisation de l'invention, ce condensateur est positionné en parallèle, en amont du pont redresseur, c'est à dire entre le pont redresseur et les bornes d'alimentation du courant alternatif.

Selon une autre forme d'exécution de l'invention, le circuit secondaire comporte en parallèle un pont redresseur, aux bornes duquel est monté un récepteur du type moteur électrique, un condensateur étant monté en parallèle dudit moteur.

La manière dont l'invention peut être réalisée, et les avantages qui en découlent ressortiront mieux des exemples de réalisation qui suivent, donnés à titre indicatif et non limitatif à l'appui des figures annexées, dans laquelle,
La figure 1 est une représentation schématique du circuit électrique d'un dispositif conforme à l'invention,
La figure 2 est une autre représentation de l'invention, dans laquelle le récepteur est constitué par un moteur électrique.
La figure 3 est une représentation schématique de la variation respectivement de la tension aux bornes de l'interrupteur et de l'intensité dans l'inductance du circuit primaire en fonction du temps,
La figure 4 est une représentation schématique du circuit d'une autre forme de réalisation de l'invention,
La figure 5 est une autre représentation du circuit de l'invention,
La figure 6 est une représentation schématique du circuit électrique pour une alimentation en triphasé.

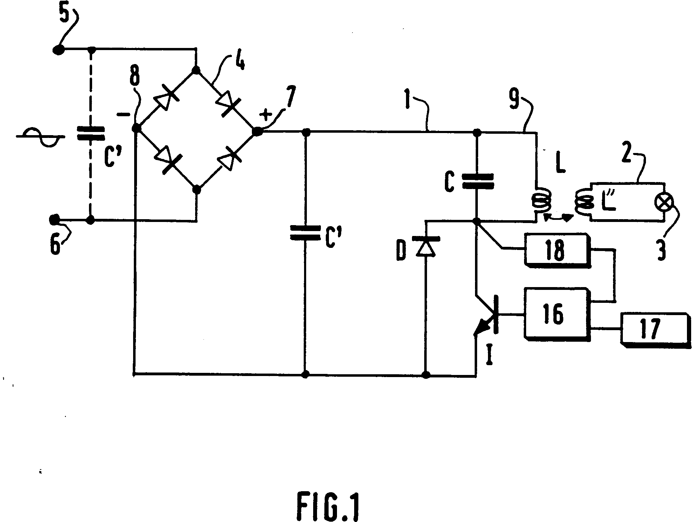

On a représenté sur la figure 1 le schéma électrique simplifié d'un dispositif-variateur de l'intensité conforme à l'invention. Celui-ci comporte deux circuits, à savoir tout d'abord un circuit primaire (1) connecté aux bornes (5,6) de la tension d'alimentation électrique, et un circuit secondaire (2), comportant en série le récepteur, et dans le cas d'espèce une lampe (3) à incandescence, dont on désire faire varier l'éclairement.

Le circuit primaire (1) comporte tout d'abord, directement branché aux bornes (5,6) de l'alimentation alternative sinusoïdale un pont redresseur (4), comportant quatre diodes, montées de telle sorte à redresser le courant en sortie du pont et ce de manière connue. De fait, on définit en (7) et (8) respectivement une borne positive et une borne négative après redressement. A ces bornes (7) et (8) sont montées en série tout d'abord un circuit résonant bouchon (9) constitué d'une inductance L et d'un condensateur C montés en parallèle, puis un interrupteur rapide I. Typiquement, celui-ci peut être constitué par un interrupteur mécanique, dont l'ouverture et la fermeture sont assurées au moyen d'un relais à électro-aimant. Néanmoins, lorsque l'on désire faire varier sur une plus large gamme la durée de fermeture de cet interrupteur I, et notamment lorsque l'on désire réduire de manière significative cette durée d, il s'avère plus avantageux d'avoir recours à un interrupteur du type à semi-conducteur.

Un tel interrupteur rapide peut être constitué par un transistor bipolaire, ou selon la technique MOS FET, ou encore IGBT..., bien connue pour leur application de fermeture et ouverture rapide d'un circuit. De manière connue, la fermeture et l'ouverture d'un tel interrupteur rapide I sont effectuées au moyen d'un circuit indépendant monostable, couramment dénommé dans le domaine considéré par l'expression en langue anglaise "timer", c'est à dire un circuit électronique qui agit sur l'électrode de commande de cet interrupteur. Ce circuit monostable (16) est en outre sous la dépendance d'un circuit de synchronisation (18), destiné à détecter la variation d'une grandeur, et, dans le cas d'espèce, à détecter le passage à zéro de la tension aux bornes de l'interrupteur I, induisant alors, par le biais du circuit monostable (16), la fermeture de ce dernier. Enfin, la durée d de fermeture de l'interrupteur I est réglée au moyen d'un circuit de commande (17), qui gère en fait la durée de fonctionnement du circuit monostable (16). Ce circuit de commande peut notamment être constitué par tout transducteur, susceptible de transformer un paramètre physique en un signal électrique. Typiquement, il peut être constitué par un potentiomètre, voire des boutons poussoirs ou des dispositifs équivalents.

En outre, l'utilisation d'un interrupteur du type à semi-conducteur en liaison avec ce dispositif, implique l'utilisation d'une diode D, montée en parallèle à l'interrupteur I, le sens passant de cette diode étant dirigé de la borne négative (8) vers la borne positive (7) du pont redresseur (4). Le rôle de la diode D sera décrit en liaison avec le fonctionnnement du dispositif de l'invention.

Selon l'invention, le dispositif comporte également un circuit secondaire (2) couplé magnétiquement dans l'air, comme il sera décrit ultérieurement avec le circuit primaire (1) au niveau du circuit résonant (9). Ce circuit secondaire (2) comporte en série le récepteur et notamment la lampe (3), dont on désire faire varier l'éclairement.

Il va être maintenant décrit plus en détail le fonctionnement du circuit conforme à l'invention. Aux bornes du pont redresseur (4), est délivré un courant périodique et non plus alternatif, dont la période est moitié de la période du courant alternatif du secteur d'alimentation. L'interrupteur I permet d'alimenter selon un séquencement déterminé le circuit résonant (9). De fait, on joue sur la durée d de fermeture de cet interrupteur pour faire varier le courant traversant l'inductance L du circuit résonant (9). Ainsi, lorsque I est fermé, le courant électrique qui circule dans l'inductance L, croît linéairement, compte tenu de la Loi bien connue de variation de l'intensité dans une inductance.

Puis, lorsque l'interrupteur I s'ouvre, sur injonction du monostable (16), dont la durée de variation est elle-même fonction du circuit de commande (17), l'inductance L, qui s'est chargée au cours de la demi-période précédente, se décharge sous forme d'une décharge oscillante, dans le condensateur C, induisant la décroissance du courant dans celui-ci, son annulation et son changement de sens selon la forme d'une sinusoïde de période, donc de fréquence fonction des caractéristiques de C et de L. Puis, l'interrupteur I se referme, sur injonction du monostable (16) et du circuit de synchronisation (18) qui a détecté le passage à zéro de la tension aux bornes de I, et l'on observe une nouvelle croissance linéaire de l'intensité dans l'inductance L et ainsi de suite.

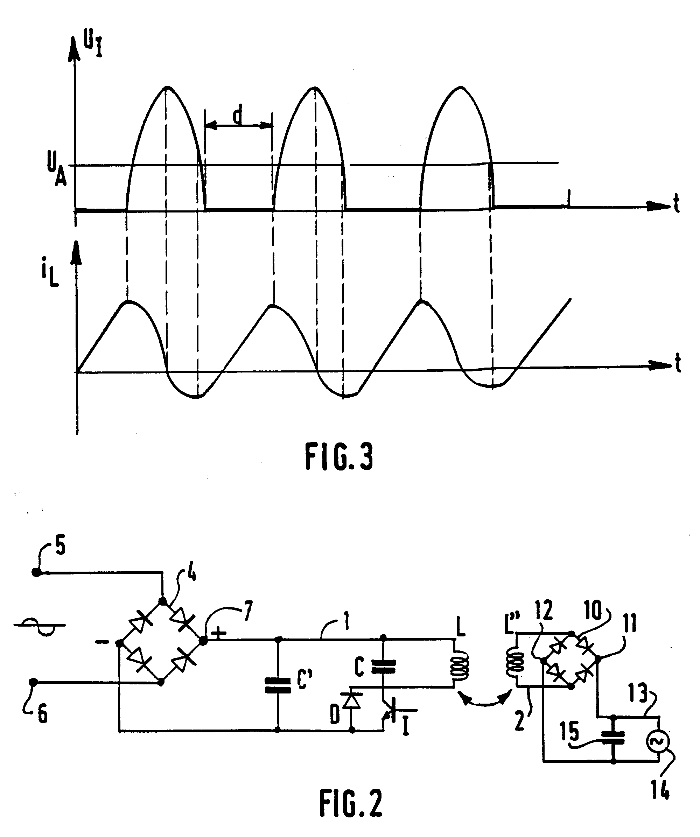

On peut observer la variation de l'intensité I_{L} dans l'inductance L au sein de la figure 3, dans laquelle, on a également représenté la variation de la tension U_{I} aux bornes de l'interrupteur I, où apparaît la tension d'alimentation U_{A}. On observe nettement, que lorsque l'interrupteur est fermé, la tension à ses bornes devenant alors nulle, on observe une zone de portion linéaire croissante de la variation de l'intensité dans l'inductance L. En revanche, dès lors que l'interrupteur I est ouvert, on observe une décroissance en sinusoïde de l'intensité dans L.

De fait, on observe que la variation de l'intensité dans l'inductance L est quasi sinusoïdale, et que sa fréquence est liée à la fréquence propre du circuit oscillant (9), et à la durée d de fermeture pendant laquelle la tension aux bornes de l'interrupteur I est nulle. De fait, le courant qui traverse L, magnétiquement couplée avec l'inductance L'' du circuit secondaire (2), induit dans celle-ci des courants de FOUCAULT, dont la fréquence est égale à celle du circuit résonant primaire (9). Ainsi, le courant qui circule dans la lampe (3) a la même fréquence et la même forme que le courant traversant l'inductance L.

De par ce couplage magnétique dans l'air, voire dans tout milieu de perméabilité magnétique égale à 1, on évite l'utilisation de fer ou ferrite, compte tenu de la fréquence élevée de fonctionnement du circuit bouchon (9). En effet aux fréquences de fonctionnement précitées, il n'y a plus lieu d'introduire un intermédiaire du type ferrite. Cette caractéristique présente l'avantage d'économiser un transformateur haute fréquence à fer ou ferrite, généralement onéreux.

Avantageusement, le fonctionnement du circuit s'effectue à fréquence élevée, typiquement comprise entre 25 et 100 kilohertz, de telle sorte à minimiser la taille des composants L, L'' et C. Ce fonctionnement à de telles fréquences présente également l'avantage que, compte tenu de l'effet pelliculaire plus élevé, qui de manière connu est observé lorsqu'un courant électrique traverse un conducteur, la circulation du courant s'effectue principalement à la surface du filament, le centre de celui-ci restant de fait plus froid et pouvant ainsi fonctionner à des températures plus élevées que pour des fréquences plus faibles, typiquement de 50 et 60 Hertz. En d'autres termes, compte tenu de l'utilisation de ces fréquences élevées, on peut pour un même rendement lumineux, diminuer la consommation d'un facteur de 20 à 30 %.

La variation de luminosité va donc être fonction de la durée d de fermeture de l'interrupteur I. En effet, en se reportant à la figure 3, et compte tenu des développements qui précèdent, on conçoit bien que l'intensité du courant qui traverse l'inductance L, et, partant la lampe (3) va être d'autant plus élevée, que la portion linéaire de la variation d'intensité dans la dite inductance se prolonge, et donc que la durée de fermeture de l'interrupteur I sera grande. De fait, plus cette durée d est petite, et plus faible sera le courant dans l'inductance L, et par voie de conséquence, plus faible sera la luminosité de la lampe. En revanche, plus d est grande et plus grande sera la luminosité de la lampe.

En fait, par rapport au secteur d'alimentation électrique alternatif 50 ou 60 Hz, le fonctionnement s'effectue comme si la valeur de la résistance effective de la lampe variait avec la variation de la durée d obtenue par action sur le circuit de commande (18) d'ouverture de l'interrupteur I.

De fait, l'onde de courant 50 ou 60 Hertz du secteur d'alimentation électrique, reste une sinusoïde non déformée par des harmoniques.

En outre, la composante haute fréquence 25 à 100 kilohertz du courant d'alimentation engendrée par les appels de courant lors des manoeuvres de l'interrupteur rapide I, est filtrée par un condensateur C', positionné en parallèle en amont ou en aval du pont redresseur (4). De fait, on n'observe pas d'harmoniques ou parasites sur le secteur d'alimentation électrique, avec toutes les conséquences déjà précisées dans le préambule. En effet, sa capacité est choisie de telle sorte à ne pas engendrer d'effet de filtre sur la fréquence du secteur, mais uniquement, sur les hautes fréquences du circuit résonant (9).

La diode D, montée en parallèle avec l'interrupteur semi-conducteur 1, est destinée à permettre la circulation du courant électrique, lors du début de fermeture de l'interrupteur I. En effet, à ce moment là, l'intensité traversant L ayant changé de sens, est en négative, il importe de pouvoir fermer le circuit et de positionner une diode D dont le sens passant est dirigée de la borne - (8) vers la borne + (7) du pont redresseur (4) pour pouvoir boucler le circuit.

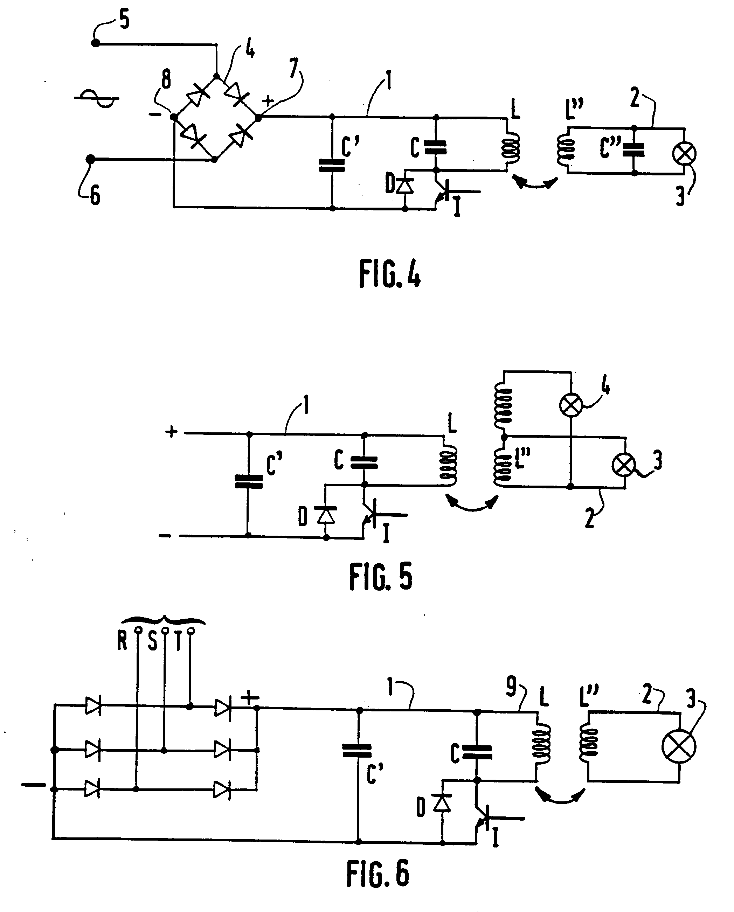

Selon une autre forme de réalisation représentée toujours sur la figure 4, et afin d'augmenter la puissance de la lampe, on peut avantageusement munir le circuit secondaire (2) d'un condensateur C'' monté en parallèle avec l'inductance L'' et la lampe (3), de telle sorte à constituer un second circuit résonant. Si la fréquence de résonance de ce second circuit est sensiblement égale à celle du circuit primaire, la puissance transférée à la lampe est optimale et ce de manière connue. L'avantage d'utiliser un second circuit résonant réside dans le fait que l'on peut éloigner les deux inductances L et L'', c'est à dire la distance du couplage magnétique, et partant, on peut augmenter l'isolement électrique entre la lampe et la tension d'alimentation. De fait, on peut obtenir un isolement de plusieurs kilovolts, voire plusieurs dizaines de kilovolts, tout en transférant à la lampe une puissance suffisante.

On a représenté sur la figure 5, un montage équivalent au précédent, dans lequel le circuit secondaire comporte en fait deux circuits montés en dérivation, susceptibles d'alimenter deux lampes (3) et (4). Pour ce faire, on réalise soit un double bobinage secondaire, soit une prise de sortie susceptible ainsi d'alimenter simultanément une lampe 12 Volts et une lampe 220 Volts avec le même dispositif de variation.

Ce dispositif de variation du fait de l'utilisation du circuit oscillant primaire est insensible aux variations extrêmes des valeurs de la résistance de la lampe. De fait, si la lampe est en court circuit, l'inductance L limite seule la valeur du courant absorbé à l'alimentation à une valeur voisine de zéro. L'échange d'énergie oscillante entre le condensateur C et l'inductance L a lieu presque sans perte, c'est à dire sans énergie active : on est en régime réactif dans le circuit oscillant (9), le secteur d'alimentation (5,6) ne compensant pas la perte d'energie du condensateur C, et ne fournissant donc aucune énergie.

En outre, si la lampe est deconnectée, l'énergie active mise en jeu est quasiment nulle et le courant absorbé à l'alimentation a une valeur voisine de zéro. De la sorte, on conçoit qu'avec ce type de dispositif de variation, il n'y a pas besoin de placer un fusible de protection en série avec l'alimentation 50 ou 60 Hertz, le fonctionnement s'adaptant à la valeur de la résistance de la lampe sans danger de détérioration.

La puissance mise en jeu peut varier dans de fortes proportions, en fonction du dimensionnement des composants L, C, I, L'', C''. On obtient en pratique des variateurs d'une dizaine de Watts, pouvant atteindre jusqu'à plusieurs kilowatts, typiquement 3,5 kilowatts par exemple sur une prise d'alimentation 230 Volts 16 Ampères.

On peut aussi avec une alimentation tri-phasée munie d'un redresseur à six diodes, obtenir des puissances supérieures à 3,5 kilowatts, telles qu'on l'a représenté sur la figure 6 et en dimensionnant en conséquence les composants décrits précédemment. On peut notamment obtenir plus de puissance, sans pour autant pénaliser le courant de la phase choisie.

Dans une variante d'éxecution de l'invention, représentée sur la figure 2, on place aux bornes du circuit secondaire (2) un pont redresseur (10), constitué comme pour le circuit primaire de quatre diodes, et définissant respectivement une borne positive (11) et une borne négative (12) après redressement. On monte alors à ces bornes (11,12) un moteur électrique, type moteur universel (14), en dérivation duquel est placé un condensateur (15). On définit de la sorte un circuit tertiaire (13), dont on peut faire varier l'intensité de la même manière que celles précédemment décrites, et partant, faire varier la vitesse de rotation dudit moteur (14).

Ainsi, il est possible avec le dispositif conforme à l'invention, de faire varier l'intensité du courant électrique dans tout type de récepteur, tant actifs que réactifs, sans pour autant agir sur la fréquence du secteur d'alimentation électrique, et en toute sécurité, compte tenu de la structure particulière du circuit électrique de ce dispositif.

## Revendications

**1/** Dispositif-variateur d'intensité d'un courant électrique dans un récepteur (3), comprenant :
- un circuit primaire (1) comportant un pont redresseur (4), branché aux bornes (5,6) du secteur d'alimentation électrique, définissant une borne positive (7) et une borne négative (8) après redressement, bornes auxquelles sont montés en série d'une part, un interrupteur rapide I et d'autre part un circuit résonant parallèle (9), comprenant en parallèle une inductance L et un condensateur C ;
- un circuit secondaire (2) intégrant en série le recepteur (3) dont on désire faire varier l'intensité,
***caractérisé*** en ce que le circuit secondaire (2) est couplé magnétiquement au circuit primaire (1), en l'absence de tout circuit magnétique, le circuit secondaire intégrant à cet effet une inductance L'' branchée aux bornes du récepteur (3).

**2/** Dispositif variateur selon la revendication 1, ***caractérisé*** en ce que l'interrupteur I est un interrupteur à semi-conducteur, dont l'ouverture et la fermeture sont gérées par un circuit monostable (16), dont d'une part, le déclenchement est commandé par un circuit de synchronisation (18), et d'autre part, la durée de fonctionement d est défini par un circuit de commande (17), l'interrupteur I étant fermé pendant cette durée d.

**3/** Dispositif-variateur selon la revendication 2, ***caractérisé*** en ce que la puissance délivrée au circuit secondaire (2) est gérée par la durée de fermeture d de l'interrupteur I, elle-même fonction de données introduites au niveau du circuit de commande (17).

**4/** Dispositif-variateur selon l'une des revendications 1 à 3, ***caracterisé*** en ce que le circuit secondaire (2) comporte en parallèle un condensateur C'', les valeurs de l'inductance L'' et du condensateur C'' de ce circuit étant adaptées pour entrer en résonance à la fréquence de fonctionnement du circuit primaire (1), de telle sorte à transmettre le maximum de puissance au récepteur (3).

**5/** Dispositif-variateur selon l'une des revendications 1 à 4, ***caractérisé*** en ce que le circuit primaire (1) comporte un condensateur C', monté en dérivation, et destiné à filtrer les composantes haute fréquence générées par le circuit oscillant (9), notamment pour éviter tout risque de transfert de ces composantes sur le secteur d'alimentation électrique.

**6/** Dispositif-variateur selon la revendication 5, ***caractérisé*** en ce que le condensateur C'est positionné en parallèle, en amont ou en aval du pont redresseur (4).

**7/** Dispositif-variateur selon l'une des revendications 1 à 6, ***caractérisé*** en ce que le circuit secondaire (2) comporte un pont redresseur (10) définissant une borne positive (11) et une borne négative (12) après redressement, auxquelles sont montés en parallèle respectivement un moteur (14) et un condensateur (15).
